# EUROPÄISCHE PATENTSCHRIFT

(11) **EP 0 715 698 B1**
(45) Veröffentlichungstag und Bekanntmachung des Hinweises auf die Patenterteilung: **11.03.1998**
(21) Anmeldenummer: 94925409.8
(22) Anmeldetag: 28.07.1994
(51) Int. Cl.: F16H 61/40, B60T 10/04

(54) **HYDROSTATISCHES GETRIEBE MIT BREMSVENTIL**
HYDROSTATIC DRIVE WITH BRAKE VALVE
TRANSMISSION HYDROSTATIQUE POURVUE D'UNE SOUPAPE DE FREIN

(30) Priorität: 02.09.1993 DE 4329689
(43) Veröffentlichungstag der Anmeldung: 12.06.1996
(73) Patentinhaber: BRUENINGHAUS HYDROMATIK GMBH, 89275 Elchingen (DE)
(72) Erfinder: SCHNIEDERJAN, Reinhold, D-89233 Neu-Ulm (DE)
(74) Vertreter: Körber, Wolfhart, Dr. rer.nat.
(86) Internationale Anmeldenummer: EP9402504
(87) Internationale Veröffentlichungsnummer: WO9506830

(56) Entgegenhaltungen:
- EP-A- 0 437 719
- WO-A-94/09294
- DE-A- 4 129 667
- DE-A- 4 234 139
- DE-B- 1 161 154
- US-A- 3 913 453
- US-A- 4 481 769

## Beschreibung

Die Erfindung betrifft ein hydrostatisches Getriebe mit einem Bremsventil nach dem Oberbegriff des Patentanspruches 1 für den Einsatz mit offenem oder geschlossenem Kreislauf und mit konstanter oder veränderlicher Stromrichtung.

Ein derartiges hydrostatisches Getriebe ist beispielsweise aus der DE-OS 41 29 667 als reversierbares Getriebe, d.h. mit veränderlicher Stromrichtung, und mit offenem Kreislauf für den Antrieb von Baggerfahrzeugen bekannt. Im Lastbetrieb eines solchen Baggerfahrzeuges fördert die von der Antriebsquelle angetriebene Hydropümpe je nach der mittels eines Fahrtrichtungsventils vorgegebenen Fahrtrichtung über die erste oder die zweite, jeweils als Vorlaufleitung dienende Arbeitsleitung zum Hydromotor, um diesen und damit die Fahrzeugräder anzutreiben. Das aufgrund der Reversierbarkeit des Getriebes in beiden Arbeitsleitungen angeordnete Bremsventil wird durch den beim Lastbetrieb in der jeweiligen Vorlaufleitung herrschenden Arbeitsdruck über eine Steuerleitung angesteuert und dadurch in einer Stellung gehalten, in der es sowohl den ungedrosselten Druckmittelvorlauf über die Vorlaufleitung als auch den ungedrosselten Druckmittelrücklauf über die jeweils andere, als Rücklaufleitung dienende Arbeitsleitung ermöglicht. Ferner beaufschlagt der Arbeitsdruck in der Vorlaufleitung als Stelldruck über die erste Stelldruckleitung sowie über die aufgrund der Reversierbarkeit des Getriebes auch an die erste Arbeitsleitung angeschlossene zweite Stelldruckleitung die Stelleinrichtung in Richtung des maximalen Verdrängungsvolumens des Hydromotors.

Im Schubbetrieb des hydrostatischen Getriebes, wenn also der Antrieb des Hydromotors nicht durch die Hydropumpe erfolgt, sondern von den Fahrzeugrädern, etwa bei Bergabfahrt, übernommen wird, fällt der Arbeitsdruck in der Vorlaufleitung und in dem über das Fahrtrichtungsventil an den Tank angeschlossenen Rücklaufleitungsabschnitt stromabwärts des Bremsventils ab und steht dadurch weder als Steuerdruck für das Bremsventil noch als Stelldruck über die erste Stelldruckleitung für die Stelleinrichtung zur Verfügung. Das auf diese Weise hydraulisch druckentlastete Bremsventil nimmt daraufhin seine Bremsstellung ein, in der es durch Querschnittsverringerung der Rücklaufleitung den Druckmittelrücklauf drosselt und einen entsprechenden Staudruck erzeugt, der den Hydromotor und damit das Fahrzeug abbremst. Der Staudruck in der Rücklaufleitung beaufschlagt als Stelldruck über die zweite Stelldruckleitung die Stelleinrichtung in Richtung des maximalen Verdrängungsvolumens des Hydromotors und schwenkt letzteren aufgrund ständiger Zunahme infolge Rückkopplung bis auf maximales Verdrängungsvolumen aus. Der in dieser Stellung vom Hydromotor erzeugte maximale Druckmittel strom erzeugt am Bremsventil einen maximalen Staudruck und damit eine maximale Bremskraft an den Fahrzeugrädern.

Diese maximale Bremskraft kann unter bestimmten Einsatzbedingungen des hydrostatischen Getriebes unerwünscht hohe Verzögerungen hervorrufen, wie etwa bei Verwendung eines nachgeschalteten mechanischen Wechselgetriebes, das die mit dem Hydromotor erzeugte Bremskraft entsprechend dem Übersetzungsverhältnis vergrößert.

Es ist Aufgabe der Erfindung, ein hydrostatisches Getriebe der eingangs genannten Art so weiterzubilden, daß die mit ihm erzielbare Bremswirkung an unterschiedliche Einsatzbedingungen angepaßt werden kann.

Diese Aufgabe wird durch die kennzeichnenden Merkmale des Anspruches 1 gelöst. Die Entlastungsventileinrichtung, vorzugsweise in Form eines einstellbaren Druckbegrenzungsventils, das mit dem über eine Steuerleitung von der zweiten Stelldruckleitung abgenommenen Steuerdruck angesteuert ist, hält bei Schubbetrieb des hydrostatischen Getriebes den Stelldruck in der zweiten Stelldruckleitung auf den mit Hilfe des Gegendrucks, zweckmäßigerweise in Form einer Feder, jeweils eingestellten Druck-Sollwert, der den Hydromotor über die Stelleinrichtung auf ein entsprechendes Verdrängungsvolumen einstellt. Der vom derart eingestellten Hydromotor erzeugte Druckmittel strom erzeugt am Bremsventil einen entsprechenden Staudruck und damit eine Bremswirkung des hydrostatischen Getriebes, die dem an der Entlastungsventileinrichtung eingestellten Druck-Sollwert proportional ist.

Die mit der Entlastungsventileinrichtung auf diese Weise durchgeführte Druckregelung weist vorzugsweise ein proportionales Verhalten auf, das durch eine mit zunehmendem Verdrängungsvolumen des Hydromotors ansteigende p-Q-Kennlinie gekennzeichnet ist. Eine solche Kennlinie ermöglicht in einfacher Weise eine Zuordnung des an der Entlastungsventileinrichtung eingestellten Druck-Sollwertes und der Verdrängungsvolumen-Einstellung des Hydromotors und damit der Bremswirkung. Bei direkter Druckregelung kann das Proportionalverhalten dadurch erzielt werden, daß der Stelldruck in der Stelleinrichtung gegen eine Feder mit entsprechender Federkennlinie wirkt. Diese Feder beaufschlagt im Falle einer mit einem Regelventil durchgeführten indirekten ruckregelung zusätzlich dieses Regelventil gegen einen von der ersten bzw. der zweiten Stelldruckleitung abgenommenen Steuerdruck, der in Richtung einer Regelstellung wirkt, in der das Regelventil die Stelldruckbeaufschlagung der Steuereinrichtung in Richtung des maximalen Verdrängungsvolumens des Hydromotors regelt. Die Druckregelung ist umso genauer, je steiler die Kennlinie ist. Umgekehrt bedeutet eine flachere Kennlinie eine bessere Leistungsausnutzung.

Um eine Verbindung der beiden Arbeitsleitungen über die Stelleinrichtung zu verhindern und damit die Aufrechterhaltung des Stelldrucks sicherzustellen, ist vorteilhafterweise in der ersten Stelldruckleitung eine in Richtung Stelleinrichtung öffnende Rückschlagventileinrichtung und in der zweiten Stelldruckleitung bezogen auf den Schubbetrieb strömungsaufwärts der Anschlüsse der Steuerleitung und der Entlastungsleitung ebenfalls eine in Richtung Stelleinrichtung öffnende Rückschlagventileinrichtung angeordnet.

Vorzugsweise ist die Entlastungsventileinrichtung willkürlich oder in Abhängigkeit von einer frei wählbaren Größe mit einem weiteren Steuerdruck in Richtung Durchflußstellung ansteuerbar. Mit diesem weiteren Steuerdruck kann die Ansteuerung der Entlastungsventileinrichtung mit dem im Schubbetrieb von der zweiten Stelldruckleitung abgenommenen Steuerdruck übersteuert oder beispielsweise im Lastbetrieb willkürlich oder etwa in Abhängigkeit von der Drehzahl des Hydromotors eine zweite Fahrstufe mit höherer Fahrgeschwindigkeit eingeschaltet werden.

Bei Ausbildung des hydrostatischen Getriebes für den reversiebaren Betrieb mit Anordnung des Bremsventils in beiden Arbeitsleitungen und Anschluß der ersten Stelldruckleitung zwischen Hydropumpe und Bremsventil sowie der zweiten Stelldruckleitung zwischen Hydromotor und Bremsventil an beide Arbeitsleitungen ist gemäß einer Weiterbildung der Erfindung die Entlastungsventileinrichtung bei Lastbetrieb des hydrostatischen Getriebes durch einen von der ersten Stelldruckleitung über eine Steuerleitung strömungsaufwärts der Rückschlagventileinrichtung abgenommenen Steuerdruck gegen den von der zweiten Stelldruckleitung abgenommenen Steuerdruck in Richtung Schließstellung angesteuert. Damit wird sichergestellt, daß die Entlastungsventileinrichtung nur im Schubbetrieb, nicht jedoch auch im Lastbetrieb durch den von der an beide Arbeitsleitungen angeschlossenen zweiten Stelldruckleitung abgenommenen Steuerdruck in Richtung Durchflußstellung angesteuert wird.

Gemäß einer Weiterbildung der Erfindung umfaßt die Entlastungsventileinrichtung ein vorzugsweise einstellbares Druckbegrenzungsventil und ein Schaltventil, die beide in der Entlastungsleitung, das erstere strömungsabwärts des letzteren, -angeordnet und jeweils von dem von der zweiten Stelldruckleitung abgenommenen Steuerdruck gegen den Gegendruck in Richtung Durchflußstellung angesteuert sind, wobei der Gegendruck am Druckbegrenzungsventil größer als der vorzugsweise einstellbare Gegendruck am Schaltventil ist. Dieses Schaltventil wird zweckmäßigerweise bei Ansteuerung der Entlastungsventileinrichtung mit dem von der ersten Stelldruckleitung abgenommenen Steuerdruck eingesetzt und mit diesem Steuerdruck angesteuert. Hierbei entspricht die Differenz der Gegendrücke am Druckbegrenzungsventil und am Schaltventil der bei Schubbetrieb in der Praxis in der Vorlaufleitung und in dem strömungsabwärts des Bremsventils gelegenen Rücklaufleitungsabschnitt sowie der angeschlossenen ersten Stelldruckleitung maximal auftretenden Druckschwankung von etwa 50 bar gegenüber dem theoretischen Druckwert Null. Das Schaltventil verhindert auf diese Weise bei Schubbetrieb eine Einflußnahme der erwähnten Druckschwankungen auf die Genauigkeit der Entlastung und damit Einstellung des Stelldrucks in der zweiten Stelldruckleitung. Ggfs. ist das Schaltventil zusätzlich mit dem weiteren Steuerdruck angesteuert.

Vorteilhafterweise umfassen die erste und zweite Stelldruckleitung eine gemeinsame, zur Stelleinrichtung führende Stelldruckleitung sowie eine erste und zweite Stelldruckzweigleitung, die an einer Abzweigung von der gemeinsamen Stelldruckleitung abzweigen und in denen die Rückschlagventileinrichtungen angeordnet sind.

In der gemeinsamen Stelldruckleitung ist zweckmäßigerweise das Regelventil angeordnet, dessen Ansteuerung mit dem Steuerdruck über eine an die erste Stelldruckzweigleitung im Bereich zwischen der Rückschlagventileinrichtung und einer Drossel angeschlossenen Steuerleitung erfolgen kann. Dadurch ergibt sich im Lastbetrieb ein sofortiges verzögerungsfreies Ansprechen des Regelventils und damit der Stelleinrichtung, während im Schubbetrieb die Stelldruckversorgung der Stelleinrichtung verzögert und damit ein zu schneller Aufbau des Bremsdrucks und/oder ungedämpftes Durchschlagen von Bremsdruckschwankungen auf die Stelleinrichtung verhindert wird.

Weitere Merkmale und Vorteile der Erfindung ergeben sich aus den verbleibenden Unteransprüchen.

Nachstehend ist das hydrostatische Getriebe gemäß der Erfindung anhand zweier bevorzugter Ausführungsbeispiele unter Bezugnahme auf die Zeichnung näher beschrieben. Es zeigen:
Fig. 1 einen Schaltplan eines hydrostatischen Getriebes gemäß dem ersten Ausführungsbeispiel der Erfindung,
Fig. 2 einen Schaltplan eines hydrostatischen Getriebes gemäB dem zweiten Ausführungsbeispiel der Erfindung, und
Fig. 3 ein Diagramm, das die Zuordnung der Verdrängungsvolumen-Einstellung des Hydromotors und des Stelldrucks zeigt.

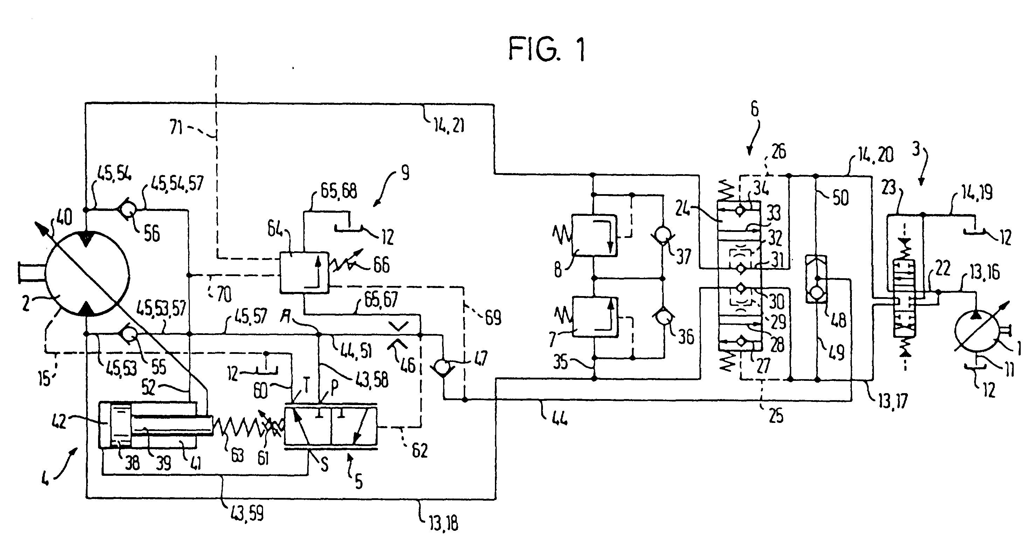

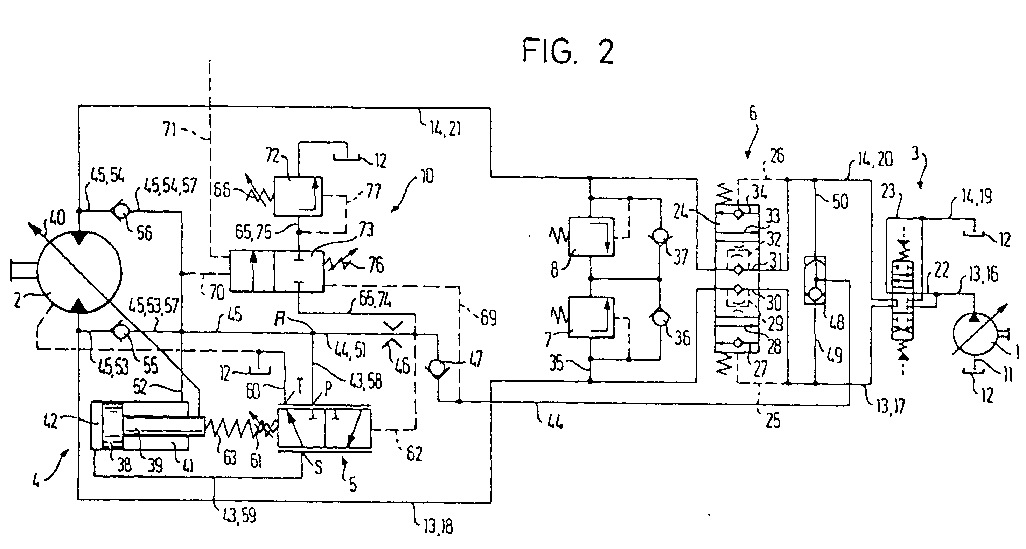

Die Zeichnung zeigt ein als Fahrantrieb für ein Fahrzeug vorgesehenes hydrostatisches Getriebe, das mit veränderlicher Stromrichtung und offenem Kreislauf ausgebildet ist, jedoch auch eine konstante Stromrichtung und einen geschlossenen Kreislauf aufweisen kann. Es umfaßt eine verstellbare Hydropumpe 1 mit einer Förderrichtung, einen verstellbaren Hydromotor 2, ein Fahrtrichtungsventil 3 zur Umsteuerung der Drehrichtung des Hydromotors 2 und damit der Fahrtrichtung des Fahrzeuges, eine Stelleinrichtung 4 mit einem zugeordneten Regelventil 5 zur Verstellung des Verdrängungsvolumens des Hydromotors 2, eine hydraulische Bremseinrichtung mit einem Bremsventil 6 und zwei zugeordnete Druckbegrenzungsventilen 7,8 sowie eine Entlastungsventileinrichtung 9 (siehe Fig. 1) bzw. 10 (siehe Fig. 2).

Die Hydropumpe 1 ist über eine Saugleitung 11 an den Tank 12 angeschlossen und von einer nicht dargestellten Antriebsquelle, z.B. einem Dieselmotor, antreibbar. Der Hydromotor 2 ist über eine erste Arbeitsleitung 13 an die Hydropumpe 1 und über eine zweite Arbeitsleitung 14 sowie über eine Leckölleitung 15 an den Tank 12 angeschlossen. Er ist mit einem nicht gezeigten Schaltgetriebe zwecks Antrieb der ebenfalls nicht gezeigten Fahrzeugräder gekoppelt.

Das Fahrtrichtungsventil 3 und das Bremsventil 6 sind in beiden Arbeitsleitungen 13,14, das erstere Ventil näher zur Hydropumpe 1 und das letztere Ventil näher zum Hydromotor 2 angeordnet. Die Leitungsabschnitte der ersten Arbeitsleitung 13 zwischen der Hydropumpe 1 und dem Fahrtrichtungsventil 3, zwischen dem Fahrtrichtungsventil 3 und dem Bremsventil 6 und zwischen dem Bremsventil 6 und dem Hydromotor 2 sind mit den Bezugszeichen 13,16; 13,17 und 13,18 und die entsprechenden Leitungsabschnitte der zweiten Arbeitsleitung 14 ausgehend vom Tank 12 mit den Bezugszeichen 14,19; 14,20 und 14,21 bezeichnet.

Das Fahrtrichtungsventil 3 ist ein willkürlich betätigbares 6/3-Wegeventil mit den Schaltstellungen: Vorwärtsfahrt, Leerlauf und Rückwärtsfahrt. Es weist dementsprechend je einen Anschluß an die Arbeitsleitungsabschnitte 13,16; 13,17; 14,19 und 14,20 sowie zwei weitere Anschlüsse auf, deren einer pumpenseitig über ein Leitungsstück 22 an den Arbeitsleitungsabschnitt 13,16 und motorseitig über ein Leitungsstück 23 an den Arbeitsleitungsabschnitt 14,19 angeschlossen ist.

In der in der Zeichnung gezeigten Leerlaufstellung des Fahrtrichtungsventils 3 sind die beiden Anschlüsse an die Leitungsstücke 22 und 23 sowie die beiden motorseitigen Anschlüsse an die Arbeitsleitungsabschnitte 13,17 und 14,20 jeweils miteinander verbunden, während die verbleibenden zwei Anschlüsse gesperrt sind. In dieser Leerlaufstellung fördert die Hydropumpe 1 in den Tank 12, während der Hydromotor 2 auf Umlauf geschaltet ist.

In der in der Zeichnung oberen Schaltstellung, d.h. bei nach unten verschobenem Kolben des Fahrtrichtungsventils 3, ist die Verbindung zwischen den beiden Anschlüssen an die Arbeitsleitungsabschnitte 13,16 und 13,17 sowie zwischen den Anschlüssen an die Arbeitsleitungsabschnitte 14,19 und 14,20 hergestellt, während die beiden verbleibenden Anschlüsse gesperrt sind. Diese obere Schaltstellung des Fahrtrichtungsventils 3 entspricht der Vorwärtsfahrt des Fahrzeugs; der Druckmittelvorlauf von der Hydropumpe 1 zum Hydromotor 2 erfolgt über die erste Arbeitsleitung 13 und der Druckmittelrücklauf zum Tank 12 über die zweite Arbeitsleitung 14.

In der in der Zeichnung unteren Schaltstellung des Fahrtrichtungsventils 3 sind die Verbindungen der in der oberen Schaltstellung offenen Anschlüsse miteinander vertauscht, so daß das Fahrzeug auf Rückwärtsfahrt eingestellt ist. Dementsprechend erfolgt der Druckmittelvorlauf über die Arbeitsleitungsabschnitte 13,-16; 14,20 und 14,21 und der Rücklauf über die Arbeitsleitungsabschnitte 13,18; 13,17 und 14,19.

Das Bremsventil 6 ist ein stetig verstellbares 4/3/Wegeventil, dessen Steuerkolben 24 durch Federzentrierung in der in der Zeichnung gezeigten Mittel- oder Bremsstellung gehalten und durch hydraulische Beaufschlagung in Richtung einer in der Zeichnung unteren und oberen Endstellung verstellbar ist. Die hydraulische Beaufschlagung erfolgt an beiden Stirnseiten des Steuerkolbens 24 über je eine an die Arbeitsleitungsabschnitte 13,17 bzw. 14,20 angeschlossene Steuerleitung 25 bzw. 26. Das Bremsventil 6 umfaßt je einen Anschluß an die Arbeitsleitungsabschnitte 13,17; 13,18; 14,20 und 14,21 sowie acht Durchflußkanäle 27 bis 34. Die Durchflußkanäle 29 und 32 weisen je einen gegenüber den Arbeitsleitungen 13,14 sowie den verbleibenden Durchflußkanälen verringerten, drosselnden Querschnitt auf. In den Durchflußkanälen 27,30,31 und 34 ist je ein in Richtung Hydropumpe 1 sperrendes Rückschlagventil angeordnet, während die verbleibenden Durchflußkanäle in beiden Richtungen durchströmbar sind. In der Bremsstellung des Bremsventils 6 stehen die beiden Anschlüsse an die Arbeitsleitungsabschnitte 13,17 und 13,18 über die Durchflußkanäle 29 und 30 in Verbindung, während die beiden Anschlüsse an die Arbeitsleitungsabschnitte 14,20 und 14,21 über die Durchflußkanäle 31 und 32 miteinander verbunden sind. Die gleichen Anschlüsse stehen in der unteren Endstellung des Bremsventils 6 über die Durchflußkanäle 27 bzw. 28 und in der oberen Endstellung über die Durchflußkanäle 33 bzw. 34 in Verbindung.

Die einstellbaren Druckbegrenzungsventile 7,8 sind in einer die Arbeitsleitungsabschnitte 13,18 und 14,21 verbindenden Leitung 35 angeordnet. Zwei in entgegengesetzten Richtungen sperrende Rückschlagventile 36 bzw. 37 sind in je einem die Druckbegrenzungsventile 7,8 umgehenden Bypaß angeordnet.

Die Stelleinrichtung 4 besteht aus einem doppeltwirkenden Stellzylinder mit einem Differentialkolben 38, der über eine Kolbenstange 39 mit einem Stellglied 40 zur Verstellung des Verdrängungsvolumens des Hydromotors 2 gekoppelt ist und mit seiner kleineren, ringförmigen Stirnfläche einen von der Kolbenstange 39 durchsetzten ersten Druckraum 41 sowie mit seiner gegenüberliegenden, größeren, kreisförmigen Stirnfläche einen zweiten Druckraum 42 definiert. Letzterer ist an eine Stelldruckleitung 43 angeschlossen, von der an einer Abzweigung A eine erste Stelldruckzweigleitung 44 und eine zweite Stelldruckzweigleitung 45 abzweigen.

Die erste Stelldruckzweigleitung 44 führt über eine Drossel 46 und ein in Richtung dieser Drossel öffnendes Rückschlagventil 47 zu einem Wechselventil 48, das über zwei Stelldruckanschlußleitungen 49,50 an die Arbeitsleitungsabschnitte 13;17 und 14,20 angeschlossen ist. Der zwischen der Abzweigung A und dem Rückschlagventil 47 befindliche Abschnitt der ersten Stelldruckzweigleitung 44 ist mit dem Bezugszeichen 51 bezeichnet.

Die zweite Stelldruckzweigleitung 45 ist über einen Stelldruckleitungsabschnitt 52 an den ersten Druckraum 41 der Stelleinrichtung 4 angeschlossen und umfaßt zwei Stelldruckanschlußleitungen 53, 54, die die Verbindung mit den Arbeitsleitungsabschnitten 13,18 und 14,21 herstellen. In den Stelldruckanschlußleitungen 53,54 ist je ein in Richtung der Arbeitsleitungsabschnitte 13,18 und 14,21 sperrendes Rückschlagventil 55,56 angeordnet. Der zwischen diesen Rückschlagventilen 55,56 und der Abzweigung A befindliche Abschnitt der zweiten Stelldruckzweigleitung 45 ist mit dem Bezugszeichen 57 bezeichnet.

Die erste Stelldruckzweigleitung 44, der Abschnitt 57 der zweiten Stelldruckzweigleitung 45 und die gemeinsame Stelldruckleitung 43 bilden im nachstehend beschriebenen Lastbetrieb des hydrostatischen Getriebes eine erste Stelldruckleitung 44,57,43, in der der Arbeitsdruck in dem jeweiligen Vorlaufleitungsabschnitt 13,17 bzw. 14,20 als Stelldruck herrscht.

Die zweite Stelldruckzweigleitung 45, der Abschnitt 51 der ersten Stelldruckzweigleitung 44 und die gemeinsame Stelldruckleitung 43 bilden im nachstehend beschriebenen Schubbetrieb des hydrostatischen Getriebes eine zweite Stelldruckleitung 45,51,43, in der der Arbeitsdruck im jeweiligen Rücklaufleitungsabschnitt 14,21 bzw. 13,18 als Stelldruck herrscht.

Das Regelventil 5 ist in der Stelldruckleitung 43 angeordnet und als stetig verstellbares 3/2-Wegeventil ausgebildet. Es weist zwei Anschlüsse P und S an die zu den Stelldruckzweigleitungen 44,45 bzw. zum Druckraum 42 der Stelleinrichtung 4 führenden Leitungsabschnitte 58 bzw. 59 der Stelldruckleitung 43 und einen Anschluß T auf, der über ein Leitungsstück 60 zum Tank 12 führt. Das Regelventil 5 ist durch die Kraft einer einstellbaren Feder 61 in der in der Zeichnung gezeigten (rechten) Ausgangsstellung gehalten und durch einen im Bereich zwischen der Drossel 46 und dem Rückschlagventil 47 von der ersten Stelldruckzweigleitung 44 als Steuerdruck über eine Steuerleitung 62 abgenommenen Steuerdruck gegen die Kraft der Feder 61 in Richtung (linke) Endstellung ansteuerbar. Das Regelventil 5 ist über eine an der gleichen Seite wie die Feder 61 angreifende Wegmeßfeder 63 mit der Kolbenstange 39 der Stelleinrichtung 4 gekoppelt. In der Ausgangsstellung des Regelventils 5 ist der Anschluß P an den Stelldruckleitungsabschnitt 43,58 gesperrt, während die beiden verbleibenden Anschlüsse S und T miteinander verbunden sind. Im Regelbereich, d.h. in sämtlichen Regelstellungen einschließlich der Endstellung, sind die Anschlüsse P und S des Regelventils 5 offen, während der Tankanschluß T gesperrt ist.

Die Entlastungsventileinrichtung 9 nach Fig. 1 umfaßt ein Druckbegrenzungsventil 64, das in einer an den Abschnitt 51 der ersten Stelldruckzweigleitung 44 zwischen der Drossel 46 und dem Rückschlagventil 47 angeschlossenen und zum Tank 12 führenden Entlastungsleitung 65 angeordnet und durch eine Feder 66 in der Schließstellung gehalten ist. Die Abschnitte der Entlastungsleitung 65 stromaufwärts und stromabwärts des Druckbegrenzungsventils 64 sind mit den Bezugszeichen 67 bzw. 68 bezeichnet. Das Druckbegrenzungsventil 64 weist drei Steueranschlüsse auf, einen auf der Seite der Feder 66 und zwei auf der gegenüberliegenden Seite. Der Steueranschluß auf der Federseite ist über eine Steuerleitung 69 an den Abschnitt der ersten Stelldruckzweigleitung 44 zwischen dem Rückschlagventil 47 und dem Wechselventil 48 angeschlossen. Einer der beiden verbleibenden Steueranschlüsse ist über eine Steuerleitug 70 an den Abschnitt 54 der zweiten Stelldruckzweigleitung 45 angeschlossen. Eine weitere Steuerleitung 71 führt zum letzten verbleibenden Steueranschluß des Druckbegrenzungsventil 64 und erlaubt es, dessen Ansteuerung über die Steuerleitungen 69 und 70 zu übersteuern. Da diese Übersteuerung willkürlich oder in Abhängigkeit von einer frei wählbaren Größe, wie etwa der Drehzahl des Hydromotors 2, erfolgen kann, ist die Steuerleitung 71 in der Zeichnung blind endend dargestellt.

Die Entlastungsventileinrichtung 10 nach Fig. 2 umfaßt das durch die gleiche einstellbare Feder 66 in Richtung Schließstellung beaufschlagte Druckbegrenzungsventil nach Fig. 1, das jedoch aufgrund geänderter Ansteuerung mit dem Bezugszeichen 72 versehen ist, und zusätzlich ein Schaltventil 73, das strömungsaufwärts des Druckbegrenzungsventils 72 in der Entlastungsleitung 65 angeordnet ist und diese in einen stromaufwärts und einen stromabwärts gelegenen Entlastungsleitungsabschnitt 74 bzw. 75 teilt. Das Schaltventil 73 ist als 2/2-Wegeventil ausgebildet und in gleicher Weise wie das Druckbegrenzungsventil 64 nach Fig.1 angesteuert ist. Mit anderen Worten, das von einer einstellbaren Feder 76 in Richtung der in Fig. 2 gezeigten Schließstellung beaufschlagte Schaltventil 73 wird in gleicher Richtung von dem über die Steuerleitung 69 von der ersten Stelldruckzweigleitung 44 zwischen dem Rückschlagventil 47 und dem Wechselventil 48 abgenommenen Steuerdruck gegen den über die Steuerleitung 71 herangeführten und den von der zweiten Stelldruckzweigleitung 45 über die Steuerleitung 70 abgenommenen Steuerdruck angesteuert. Das Druckbegrenzungsventil 72 wird in herkömmlicher Weise durch den von dem Entlastungsleitungsabschnitt 75 zwischen beiden Ventilen 72 und 73 über eine Steuerleitung 77 abgenommenen Druck in Richtung Durchflußstellung angesteuert.

Die Funktion des erfindungsgemäßen hydrostatischen Getriebes nach Figur 1 ist wie folgt:

Bei stehendem Fahrzeug befinden sich das Fahrtrichtungsventil 3 und das Bremsventil 6 in ihrer jeweiligen Mittelstellung, so daß die angetriebene Hydropumpe 1 über die Leitungsstücke 22,23 in den Tank 12 fördert und der Hydromotor 2 dementsprechend nicht angetrieben wird. Die Arbeitsleitungsabschnitte 13,17; 13,18; 14,20 und 14,21 und damit auch die erste Stelldruckzweigleitung 44 und die zweite Stelldruckzweigleitung 45 sind drucklos, so daß sich das Druckbegrenzungsventil 64 unter der Wirkung der Feder 66 in der Schließstellung und das Regelventil 5 unter der Wirkung der Federn 61,63 in der Ausgangsstellung befindet, in der der Druckraum 42 der Stelleinrichtung 4 zum Tank 12 hin entlastet ist. Der Differentialkolben 38 nimmt unter dem Druck der Wegmeßfeder 63 die in Figur 1 gezeigte linke Endstellung ein, die dem minimalen Verdrängungsvolumen des Hydromotors 2 entspricht.

Nach Umschalten des Fahrtrichtungsventils 3 in die obere Schaltstellung fördert die Hydropumpe 1 in die als Vorlaufleitung dienende erste Arbeitsleitung 13. Der sich dabei im Arbeitsleitungsabschnitt 13,17 aufbauende Arbeitsdruck herrscht auch als Stelldruck in der ersten Stelldruckzweigleitung 44 und dem sich bis zu den geschlossenen Rückschlagventilen 55,56 erstreckenden Abschnitt 57 der zweiten Stelldruckzweigleitung 45 sowie im Stelldruckleitungsabschnitt 43,48. Er wirkt über die Steuerleitungen 69 und 70 als Druckdifferenz auf das Druckbegrenzungsventil 64, so daß dieses lediglich durch die Feder 66 in der Schließstellung gehalten ist. Er wirkt ferner über die Steuerdruckleitung 62 als Steuerdruck auf das Regelventil 5 und verschiebt dieses in Richtung Endstellung, sobald die hydraulische Kraft des Steuerdrucks die Kraft der Federn 61,63 übersteigt. Das Regelventil 5 stellt die Verbindung zwischen den Stelldruckleitungsabschnitten 43,58 und 43,59 her, so daß das Druckmittel im Arbeitsleitungsabschnitt 13,17 über das geöffnete Rückschlagventil 47 in der ersten Stelldruckzweigleitung 44 als Stelldruckmittel in den Druckraum 42 der Stelleinrichtung 4 einströmt und bei ausreichendem Druck den Differentialkolben 38 unter zunehmender Belastung der Wegmeßfeder 63 in Richtung seiner rechten Endstellung verschiebt, die dem maximalen Verdrängungsvolumen des Hydromotors 2 entspricht. Sobald die Federkräfte der Federn 61,63 mit der hydraulischen Kraft des Steuerdrucks im Gleichgewicht sind, ist der Regelpunkt erreicht, d.h. das Regelventil 5 und der Differentialkolben 38 nehmen jeweils eine der Größe des Steuerdrucks entsprechende Stellung ein, die einer Verdrängungsvolumen-Einstellung des Hydromotors 2 auf ein größeres als das minimale Verdrängungsvolumen entspricht. Der im Arbeitsleitungsabschnitt 13,17 herrschende Arbeitsdruck wirkt gleichzeitig über die Steuerleitung 25 auf den Steuerkolben 24 des Bremsventils 6 und verschiebt diesen in die untere Endstellung, so daß das von der Hydropumpe 1 geförderte Druckmittel über den Durchflußkanal 27 im Bremsventil 6 zum Hydromotor 2 strömt und diesen antreibt. Auf diese Weise beginnt das Fahrzeug vorwärts zu fahren. Der Druckmittelrücklauf zum Tank 12 erfolgt ungedrosselt über den Arbeitsleitungsabschnitt 14,21, den Durchflußkanal 28 im Bremsventil 6 und die Arbeitsleitungsabschnitte 14,20 und 14,19. Da der Arbeitsdruck beim Anfahren des Fahrzeugs, d.h. beim Beschleunigen, größer als bei nicht beschleunigter Fahrt ist, nehmen das Regelventil 5 und damit der Differentialkolben 38 im allgemeinen ihre jeweilige Endstellung ein, so daß der Hydromotor 2 auf maximales Verdrängungsvolumen ausgeschwenkt ist. Mit abnehmendem Arbeitsdruck, wie er etwa bei nicht beschleunigter Fahrt auftritt, wird durch entsprechendes Zurückstellen des Regelventils 5 und des Differentialkolbens 38 in eine entsprechende Zwischenstellung der Hydromotor 2 auf ein entsprechend verringertes Verdrängungsvolumen zurückgeschwenkt.

Statt in Abhängigkeit vom Arbeitsdruck kann mittels des Druckbegrenzungsventils 64 der Hydromotor 2 auch willkürlich oder beispielsweise in Abhängigkeit der Drehzahl des Hydromotors 2 auf ein verringertes Verdrängungsvolumen zurückgeschwenkt werden. Im ersteren Fall wird das Druckbegrenzungsventil 64 durch manuelle Betätigung eines Steuerventils (nicht gezeigt) in der Steuerleitung 71 mit einem beispielsweise von der Arbeitsleitung 13 abgenommenen Steuerdruck angesteuert und auf diese Weise in die Durchflußstellung verstellt, so daß der in der ersten Stelldruckleitung 44,57,43 herrschende Stell- und Steuerdruck durch gesteuerte Entlastung zum Tank 12 hin auf einen entsprechend geringeren Wert abgesenkt wird. Im letzteren Fall wird das Druckbegrenzungsventil 64 über die Steuerleitung 71 mit einem der Drehzahl des Hydromotors 2 proportionalen Steuerdruck angesteuert.

Die soeben beschriebenen Vorgänge laufen ebenfalls bei Rückwärtsfahrt des Fahrzeugs lediglich mit dem Unterschied ab, daß das Fahrtrichtungsventil 3 die untere Schaltstellung und das Bremsventil 6 die obere Endstellung einnehmen und der Arbeitsdruck in der nun als Vorlaufleitung dienenden zweiten Arbeitsleitung 14 herrscht, während der Druckmittelrücklauf über die erste Arbeitsleitung 13 erfolgt.

Bei Überschreitung des jeweils an den Druckbegrenzungsventilen 7,8 eingestellten Wertes wird der Druck im jeweils höher belasteten Arbeitsleitungsabschnitt 13,18; 14,21 über das Druckbegrenzungsventil 7 bzw. 8 zum jeweils anderen Arbeitsleitungsabschnitt 14,21 bzw. 13,18 hin entlastet.

Sobald das Fahrzeug vom vorstehend beschriebenen Lastbetrieb in den Schubbetrieb wechselt, wenn also der Antrieb des Hydromotors 2 nicht durch die Hydropumpe 1 erfolgt, sondern von den Fahrzeugrädern übernommen wird, etwa bei Bergabfahrt oder bei Leerlauf des Dieselmotors, fällt der Arbeitsdruck in der jeweils als Vorlaufleitung dienenden Arbeitsleitung 13 (bei Vorwärtsfahrt) bzw. 14 (bei Rückwärtsfahrt) und damit auch in der Steuerleitung 25 bzw. 26 ab. Das auf diese Weise hydraulisch druckentlastete Bremsventil 6 nimmt unter der Wirkung seiner Federzentrierung die Bremsstellung ein. In dieser Stellung fördert der von den Fahrzeugrädern angetriebene, als Pumpe wirkende Hydromotor 2 das über die jeweilige Vorlaufleitung 13 (bei Vorwärtsfahrt) bzw. 14 (bei Rückwärtsfahrt) einschließlich des Durchflußkanals 30 bzw. 31 angesaugte Druckmittel über die jeweils als Rücklaufleitung dienende Arbeitsleitung 14 (bei Vorwärtsfahrt) bzw. 13 (bei Rückwärtsfahrt) einschließlich des jeweiligen Durchflußkanals 32 bzw. 29 im Bremsventil 6 zum Tank 12. Dabei baut sich im jeweiligen Arbeitsleitungsabschnitt 14,21 bzw. 13,18 ein der Drosselwirkung des jeweiligen Durchflußkanals 32 bzw. 29 entsprechender Staudruck auf, der den Hydromotor 2 abbremst. Da das Druckmittel nach dem drosselnden Durchflußkanal 32 bzw. 29 nahezu drucklos über den Arbeitsleitungsabschnitt 14,20 bzw. 13,17 zum Tank 12 abströmt, sind die Steuerleitung 26 bzw. 25 sowie die erste Stelldruckzweigleitung 44 und damit die Steuerleitung 62 sowie die Steuerleitungen 69,70 ebenfalls drucklos. Auf diese Weise bleibt das Druckbegrenzungsventil 64 unter der Wirkung der Feder 66 in der Schließstellung und das Bremsventil 6 während der Dauer des Schubbetriebs in der Bremsstellung; es entfällt auch die während des Lastbetriebs des hydrostatischen Getriebes den Rückschwenkkräften des Triebwerks des Hydromotors 2 entgegenwirkende Druckmittelbeaufschlagung des Regelventils 5 und des Differentialkolbens 38 über das Wechselventil 48. Stattdessen herrscht der Staudruck im Rückläufleitungsäbschnitt 14,21 (bei Vorwärtsfahrt) oder 13,18 (bei Rückwärtsfahrt) auch in der Stelldruckänschlußleitung 54 bzw. 53 - bei geöffnetem Rückschlagventil 56 bzw. 55 - , im sich anschließenden Abschnitt 57 der zweiten Stelldruckzweigleitung 45, im Abschnitt 51 der ersten Stelldruckzweigleitung 44 - bei geschlossenem Rückschlagventil 47 - sowie im Stelldruckleitungsabschnitt 43,58 und wirkt in der vorbeschriebenen Weise auf das Regelventil 5 und verstellt bei Erreichen des Regelpunktes den Differentialkolben 38 in der ebenfalls vorbeschriebenen Weise in Richtung der jeweiligen Endstellung, d.h. in Richtung des maximalen Verdrängungsvolumens des Hydromotors 2. Dieser erzeugt einen entsprechend größeren Druckmittelstrom, der beim Durchgang durch den drosselnden Durchflußkänal 32 bzw. 29 einen entsprechend höheren Staudruck hervorruft. Dieser höhere Staudruck bzw, größere Druckmittelstrom wirkt wiederum auf das Regelventil 5 und die Stelleinrichtung 4 zurück und bewirkt ein weiteres Ausschwenken des Hydromotors 2, bis dieser schließlich auf sein maximales Verdrängungsvolumen eingeregelt ist und einen maximalen Bremsdruck und damit ein maximales Bremsmoment an den Fahrzeugrädern erzeugt.

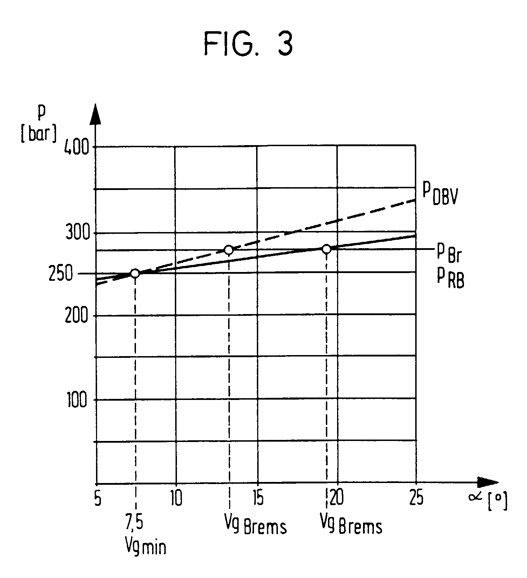

Während dieses soeben beschriebenen Regelvorganges wirkt der in den vorgenannten Leitungen und Leitungsabschnitten 54 bzw. 53, 57,51,58 -, die, wie bereits erwähnt, bei Schubbetrieb des hydrostatischen Getriebes gemeinsam mit dem Stelldruckleitungsabschnitt 59 eine zweite Stelldruckleitung 45,51,43 bilden - als Stell- und Steuerdruck herrschende Staudruck über die Steuerleitung 70 auf das Druckbegrenzungsventil 64 und öffnet dieses, sobald die. hydraulische Kraft des Steuerdrucks die Kraft der Feder 66 übersteigt. Der in der ersten Stelldruckleitung 44,57,43 als Stell- und Steuerdruck herrschende Staudruck wird über die Drossel 46 und das Druckbegrenzungsventil 64 gedrosselt und gesteuert zum Tank 12 hin entlastet, so daß sich in der ersten Stelldruckleitung 45,51,43 ein dem mit der Feder 66 am Druckventil 64 eingestellten Druck-Sollwert entsprechender Stell- und Steuerdruck einstellt, der in vorbeschriebener Weise das Regelventil 5 und den Stellkolben 38 verstellt und damit den Hydromotor 2 auf ein entsprechendes Verdrängungsvolumen einstellt. Wenn beispielsweise der Regelbeginn des Regelventils 5 entsprechend der Einstellkraft der Feder 61 auf einen Druck p_{RB} von 250 bar festgelegt und das Druckbegrenzungsventil 64 auf einen Druck p_{Br} von 280 bar eingestellt ist, ergibt sich nach Fig. 3 für den Hydromotor 2 entsprechend der mit durchgezogener Linie dargestellten (flacheren) Federkennlinie der Wegmeßfeder 63 (Δp 50 bar) ein Schwenkwinkel von 19,5° und entsprechend der mit gestrichelter Linie dargestellten (steileren) Federkennlinie der Wegmeßfeder 63 (Δ p= 100 bar) ein Schwenkwinkel von 13,5°. Eine derartige Einstellung des Hydromotors 2 auf ein gegenüber dem maximal möglichen Verdrängungsvolumen geringeres Verdrängungsvolumen ist beispielsweise dann erforderlich, wenn das Fahrzeug bei Bergabfahrt nicht bis zum Stillstand verzögert werden soll.

Die vorbeschriebene Ansteuerung des Druckbegrenzungsventils 64 über die Steuerleitung 70 kann in vorbeschriebener Weise auch bei Schubbetrieb des hydrostatischen Getriebes mit dem Steuerdruck in der Steuerleitung 71 übersteuert werden.

Das hydrostatische Getriebe nach Fig. 2 unterscheidet sich in seiner Funktion von demjenigen nach Fig. 1 dadurch, daß das Schaltventil 73 bei Lastbetrieb des hydrostatischen Getriebes in gleicher Weise wie das Druckbegrenzungsventil 64 nach Fig. 1 angesteuert ist und gemeinsam mit dem Druckbegrenzungsventil 72 geschlossen bleibt, während es im Schubbetrieb des hydrostatischen Getriebes früher als das Druckbegrenzungsventil 72 in die Durchflußstellung überführt wird, da es im Vergleich zu diesem mittels der Feder 76 auf einem um die in der Praxis im Arbeitsleitungsabschnitt 14,20 (bei Vorwärtsfahrt) bzw. 13,17 (bei Rückwärtsfahrt) auftretende maximale Rücklaufdruckschwankung von etwa 0-50 bar geringeren Druck-Sollwert eingestellt ist. Das Schaltventil 73 verbindet in seiner Durchflußstellung die Entlastungsleitungsabschnitte 74,75 miteinander. Das nunmehr vom Druck im Entlastungsleitungsabschnitt 75 über die Steuerleitung 77 angesteuerte Druckbegrenzungsventil 72 öffnet, sobald die hydraulische Kraft dieses Druckes die Kraft der Feder 66 übersteigt. Die Entlastung des Stell- und Steuerdrucks in der zweiten Stelldruckleitung 45,51,43 erfolgt in gleicher Weise wie mit dem Druckbegrenzungsventil 64 nach Fig. 1, jedoch mit dem Ergebnis einer genaueren Einstellung des Stelldrucks und damit des Verdrängungsvolumens des Hydromotors, da das Schaltventil 73 eine Beeinflussung der Ansteuerung des Druckbegrenzungsventils 72 durch die Rücklaufdruckschwankungen verhindert.

## Patentansprüche

1. Hydrostatisches Getriebe,
- mit wenigstens einer Hydropumpe (1) und wenigstens einem verstellbaren Hydromotor (2), der an eine erste und an eine zweite Arbeitsleitung, (13,14) angeschlossen ist, von denen wenigstens die erste (13) zur Hydropumpe führt, und dessen Stellglied (40) zur Verstellung seines Verdrängungsvolumens mit einer Stelleinrichtung (4) verbunden ist, die bei Lastbetrieb des hydrostatischen Getriebes durch einen Stelldruck in einer an wenigstens die erste Arbeitsleitung angeschlossenen ersten Stelldruckleitung (44,57,43) und bei Schubbetrieb des hydrostatischen Getriebes durch einen Stelldruck in einer an wenigstens die zweite Arbeitsleitung angeschlossenen zweiten Stelldruckleitung (45,51,43) in Richtung des maximalen Verdrängungsvolumens des Hydromotors beaufschlagbar ist, und
- mit einem Bremsventil (6), das in wenigstens der zweiten Arbeitsleitung strömungsabwärts des Anschlusses der zweiten Stelldruckleitung angeordnet ist und bei Schubbetrieb des hydrostatischen Getriebes den Querschnitt der jeweiligen Arbeitsleitung zumindest teilweise schließt,
gekennzeichnet durch eine Entlastungsventileinrichtung (9,10), die bei Schubbetrieb des hydrostatischen Getriebes durch einen von der zweiten Stelldruckleitung (45,51,43) abgenommenen Steuerdruck gegen einen Gegendruck (66, 76) in Richtung Durchflußstellung angesteuert wird und in dieser Durchflußstellung den Stelldruck in der zweiten Stelldruckleitung (45,51,43) über eine Entlastungsleitung (65) gesteuert zum Tank (12) hin entlastet.

2. Hydrostatisches Getriebe nach Anspruch 1,
dadurch gekennzeichnet,
daß die Entlastungsventileinrichtung (9) als ein in der Entlastungsleitung (65) angeordnetes, mit dem von der zweiten Stelldruckleitung (45,51,43) über eine Steuerleitung (70) abgenommenen Steuerdruck gegen den Gegendruck (66) in Richtung Durchflußstellung angesteuertes Druckbegrenzungsventil (64) ausgebildet ist.

3. Hydrostatisches Getriebe nach Anspruch 1,
dadurch gekennzeichnet,
daß die Entlastungsventileinrichtung (10) ein Druckbegrenzungsventil (72) und ein Schaltventil (73) umfaßt, die beide in der Entlastungsleitung (65), das erstere (72) strömungsabwärts des letzteren (73), angeordnet und jeweils von dem von der zweiten Stelldruckleitung (45,51,43) abgenommenen Steuerdruck gegen den Gegendruck (66,76) in Richtung Durchflußstellung angesteuert sind, wobei der Gegendruck (66) am Druckbegrenzungsventil (72) größer als der Gegendruck (76) am Schaltventil (73) ist.

4. Hydrostatisches Getriebe nach Anspruch 3,
dadurch gekennzeichnet,
daß das Schaltventil (73) über eine Steuerleitung (70) direkt und das Druckbegrenzungsventil (72) über eine Steuerleitung (77) indirekt via dem zwischen beiden Ventilen (72,73) gelegenen Abschnitt (75) der Entlastungsleitung (65) an die zweite Stelldruckleitung (45,51,43) angeschlossen sind.

5. Hydrostatisches Getriebe nach wenigstens einem vorhergehenden Anspruch,
dadurch gekennzeichnet,
daß der die Entlastungsventileinrichtung (9,10) in Richtung Schließstellung beaufschlagende Gegendruck (66,76) der Druck einer einstellbaren Feder ist.

6. Hydrostatisches Getriebe nach wenigstens einem vorhergehenden Anspruch,
dadurch gekennzeichnet,
daß in der ersten Stelldruckleitung (44,57,43) eine in Richtung Stelleinrichtung (4) öffnende Rückschlagventileinrichtung (47) und in der zweiten Stelldruckleitung (45,51,43) bezogen auf den Schubbetrieb strömungsaufwärts der Anschlüsse der Steuerleitung (70) und der Entlastungsleitung (65) ebenfalls eine in Richtung Stelleinrichtung (4) öffnende Rückschlagventileinrichtung (55,56) angeordnet ist.

7. Hydrostatisches Getriebe nach Anspruch 6, in reversierbarer Ausführung, wobei das Bremsventil (6) in beiden Arbeitsleitungen (13,14) angeordnet, die erste Stelldruckleitung (44,57,4?) zwischen der Hydropumpe (1) und dem Bremsventil (6) sowie die zweite Stelldruckleitung (45,51,43) zwischen dem Hydromotor (2) und dem Bremsventil (6) an beide Arbeitsleitungen (13,14) angeschlossen ist,
dadurch gekennzeichnet,
daß die Entlastungsventileinrichtung (9,10) bei Lastbetrieb des hydrostatischen Getriebes durch einen von der ersten Stelldruckleitung (44,57,43) über eine Steuerleitung (69) strömungsaufwärts der Rückschlagventileinrichtung (47) abgenommenen Steuerdruck gegen den von der zweiten Stelldruckleitung (45,51,43) abgenommenen Steuerdruck in Richtung Schließstellung angesteuert ist.

8. Hydrostatisches Getriebe nach wenigstens einem vorhergehenden Anspruch,
dadurch gekennzeichnet,
daß die Entlastungsventileinrichtung (9,10) willkürlich oder in Abhängigkeit von einer frei wählbaren Größe über eine weitere Steuerleitung (71) mit einem weiteren Steuerdruck gegen den Gegendruck (66,76) in Richtung Durchflußstellung ansteuerbar ist.

9. Hydrostatisches Getriebe nach wenigstens einem der Ansprüche 3-8,
dadurch gekennzeichnet,
daß das Schaltventil (73) mit dem über die Steuerleitung (69) von der ersten Stelldruckleitung (44,57,43) abgenommenen Steuerdruck angesteuert bzw. über die weitere Steuerleitung (71) mit dem weiteren Steuerdruck ansteuerbar ist.

10. Hydrostatisches Getriebe nach wenigstens einem vorhergehenden Anspruch,
dadurch gekennzeichnet,
daß die Stelleinrichtung (4) durch eine Feder (63) in Richtung minimalem Verdrängungsvolumen des Hydromotors (2) beaufschlagt ist.

11. Hydrostatisches Getriebe nach Anspruch 10,
gekennzeichnet durch ein Regelventil (5), das im Last- und im Schubbetrieb des hydrostatischen Getriebes mit einem von der ersten Stelldruckleitung (44,57,53) bzw. der zweiten Stelldruckleitung (45,51, 43) abgenommenen Steuerdruck gegen einen Gegendruck in Richtung Regelstellung angesteuert ist und in dieser Regelstellung die Stelldruckbeaufschlagung der Stelleinrichtung (4) in Richtung des maximalen Verdrängungsvolumens des Hydromotors (2) regelt, wobei der Gegendruck den Druck der die Stelleinrichtung (4) beaufschlagenden Feder (63) umfaßt, deren Belastung mit zunehmender Verstellung der Stelleinrichtung (4) in Richtung maximalen Verdrängungsvolumens des Hydromotors (2) ansteigt.

12. Hydrostatisches Getriebe nach wenigstens einem vorhergehenden Anspruch,
dadurch gekennzeichnet,
daß die erste und die zweite Stelldruckleitung (44,57,43; 45,51,43) eine gemeinsame, zur Stelleinrichtung (4) führende Stelldruckleitung (43) sowie eine erste und eine zweite Stelldruckzweigleitung (44,45) umfassen, die an einer Abzweigung (A) von der gemeinsamen Stelldruckleitung (43) abzweigen und in denen die Rückschlagventileinrichtungen (47;55,56) angeordnet sind.

13. Hydrostatisches Getriebe nach Anspruch 11 und 12,
dadurch gekennzeichnet,
daß das Regelventil (5) in der gemeinsamen Stelldruckleitung (43) angeordnet ist.

14. Hydrostatisches Getriebe nach wenigstens einem der Ansprüche 11 bis 13,
dadurch gekennzeichnet,
daß der Steuerdruck zur Ansteuerung des Regelventils (5) über eine Steuerleitung (62) von der ersten Stelldruckzweigleitung (44) im Bereich zwischen der Rückschlagventileinrichtung (47) und einer Drossel (46) abgenommen wird.

15. Hydrostatisches Getriebe nach Anspruch 14,
dadurch gekennzeichnet,
daß die Entlastungsleitung (65) an die erste Stelldruckzweigleitung (44) im Bereich zwischen der Rückschlagventileinrichtung (47) und der Drossel(46) angeschlossen ist.

## Claims

1. Hydrostatic transmission,
- having at least one hydraulic pump (1) and at least one adjustable hydraulic motor (2) which is connected to a first and to a second working line (13, 14) of which at least the first (13) leads to the hydraulic pump, and the setting member (40) of which motor - for setting its displacement volume - is connected with a setting device (4) which upon load operation of the hydrostatic transmission can be acted upon by a setting pressure in a first setting pressure line (44, 57, 43) connected at least to the first working line, and the case of overrun operation of the hydrostatic transmission can be acted upon by a setting pressure in a second setting pressure line (45, 51, 43), connected at least to the second working line, in the direction of maximum displacement volume of the hydraulic motor, and
- having a brake valve (6) that is arranged at least in the second working line downstream of the connection of the second setting pressure line and which upon overrun operation of the hydrostatic transmission at least partially closes the cross-section of the respective working line,
characterised by a relief valve device (9, 10) which upon overrun operation of the hydraulic transmission is controlled by means of a control pressure taken from the second setting pressure line (45, 51, 43), against a counter-pressure (66, 76), in the direction of throughflow position, and in this throughflow position relieves the setting pressure in the second setting pressure line (45, 51, 43) controllably via a relief line (65) to the tank (12).

2. Hydrostatic transmission according to claim 1,
characterised in that,
the relief valve device (9) is formed as a pressure limiting valve (64) arranged in the relief line (65), controlled with the control pressure taken from the second setting pressure line (45, 51, 43) via a control line (70), against the counter-pressure (66), in the direction throughflow position.

3. Hydrostatic transmission according to claim 1,
characterised in that,
the relief valve device (10) includes a pressure limiting valve (72) and a switching valve (73) which are both arranged in the relief line (65), the former (72) downstream of the latter (73), and which are each controlled by the control pressure taken from the second setting pressure line (45, 51, 43), against the counter-pressure (66, 76), in the direction of the throughflow position, whereby the counter-pressure (66) at the pressure limiting valve (72) is larger than the counter-pressure (76) at the switching valve (73).

4. Hydrostatic transmission according to claim 3,
characterised in that,
the switching valve (73) is directly connected to the second setting pressure line (45, 51, 43) via a control line (70) and the pressure limiting valve (72) is indirectly connected to the second setting pressure line (45, 51, 43) by way of a control line (77) via the section (75) of the relief line (65) between the two valves (72, 73).

5. Hydrostatic transmission according to any preceding claim,
characterised in that,
the counter-pressure (66, 76) acting upon the relief valve device (9, 10) in the direction of the closed position is the pressure of a settable spring.

6. Hydrostatic transmission according to any preceding claim,
characterised in that,
there is arranged in the first setting pressure line (44, 57, 43) a non-return valve device (47) opening in the direction of the setting device (4) and there is arranged in the second setting pressure line (45, 51, 43) likewise a non-return valve device (55, 56) opening in the direction of the setting device (4), upstream - referred to overrun operation - of the connections of the control line (70) and of the relief line (65).

7. Hydrostatic transmission according to claim 6, in a reversible configuration, whereby the brake valve (6) is arranged in both working lines (13, 14), the first setting pressure line (44, 57, 43) is connected between the hydraulic pump (1) and the brake valve (6) and the second setting pressure line (45, 51, 43) is connected between the hydraulic motor (2) and the brake valve (6) to both working lines (13, 14),
characterised in that,
in the case of load operation of the hydrostatic transmission, the relief valve device (6, 10) is controlled by means of a control pressure taken from the first setting pressure line (44, 57, 43) via a control line (69) upstream of the non-return valve device (47), against the control pressure taken from the second setting pressure line (45, 51, 43), in the direction of the closed position.

8. Hydrostatic transmission in accordance with any preceding claim,
characterised in that,
the relief valve device (9, 10) is, with a further control pressure, arbitrarily controllable or controllable in dependence upon a freely selectable parameter via a further control line (71), against the counter-pressure (66, 76), in the direction of the throughflow position.

9. Hydrostatic transmission according to any of claims 3 to 8,
characterised in that,
the switching valve (73) is controlled with the control pressure taken from the first setting pressure line (44, 57, 43) via the control line (69) or is controllable with the further control pressure via the further control line (71).

10. Hydrostatic transmission in accordance with any preceding claim,
characterised in that,
the setting device (4) is acted upon by means of a spring (63) in the direction of minimum displacement volume of the hydraulic motor (2).

11. Hydrostatic transmission according to claim 10,
characterised by a regulation valve (5) which - in load and in overrun operation of the hydraulic transmission - is controlled with a control pressure taken from the first setting pressure line (44, 57, 43) or from the second setting pressure line (45, 51, 43), against a counter-pressure, in the direction of a regulation position, and in this regulation position regulates the setting pressure action on setting device (4) in the direction of the maximum displacement of the hydraulic motor (2), whereby the counter-pressure includes the pressure of the spring (63) acting upon the setting device (4), the loading of which spring increases with increasing displacement of the setting device (4) in the direction of maximum displacement volume of the hydraulic motor (2).

12. Hydrostatic transmission according to any preceding claim,
characterised in that,
the first and the second setting pressure line (44, 57, 43; 45, 51, 43) include a common setting pressure line (43) leading to the setting device (4) and a first and a second setting pressure branch line (44, 45) which branch off at a branch point (A) from the common setting pressure line (43) and in which the non-return valve devices (47; 55, 56) are arranged.

13. Hydrostatic transmission according to claim 11 and 12,
characterised in that,
the regulation valve (5) is arranged in the common setting pressure line (43).

14. Hydrostatic transmission according to any of claims 11 to 13,
characterised in that,
the setting pressure for control of the regulation valve (5) is taken from the first setting pressure branch line (44), in the region between the non-return valve device (47) and a throttle (46), via a control line (62).

15. Hydrostatic transmission according to claim 14,
characterised in that,
the relief line (65) is connected to the first setting pressure branch line (44) in the region between the non-return valve device (47) and the throttle (46).

## Revendications

1. Transmission hydrostatique
- avec au moins une pompe hydraulique (1) et au moins un moteur hydraulique (2) variable, qui est raccordé à une première conduite de travail (13) et une deuxième conduite de travail (14), dont la première (13) au moins mène à la pompe hydraulique, et dont l'organe de réglage (40) est relié, pour le réglage de son volume de déplacement à un dispositif de réglage (4), qui en cas de fonctionnement sous charge de la transmission hydrostatique, peut être sollicité par une pression de réglage dans une première conduite de pression de réglage (44, 57, 43), raccordée à au moins la première conduite de travail et, en cas de fonctionnement en poussée de la transmission hydrostatique, peut être sollicité par une pression de réglage dans une deuxième conduite de pression de réglage (45, 51, 43), raccordée à au moins la deuxième conduite de travail, en direction du volume de déplacement maximal du moteur hydraulique et
- avec une soupape de freinage (6), qui est placée dans au moins la deuxième conduite de travail, en aval du raccord de la deuxième conduite de pression de réglage et qui ferme au moins partiellement la section de la conduite de travail respective, en cas de fonctionnement en poussée de la transmission hydrostatique,
caractérisée par un dispositif à soupape de décharge (9, 10) qui en cas de fonctionnement en poussée de la transmission hydrostatique, est commandé par une pression de commande, prélevée de la deuxième conduite de pression de réglage (45, 51, 43), à l'encontre d'une contre-pression (66, 76), en direction de la position d'écoulement et qui dans cette position d'écoulement, détend, de manière commandée, la pression de réglage dans la deuxième conduite de pression de réglage (45, 51, 43), par l'intermédiaire d'une conduite de décharge (65), vers le réservoir (12).

2. Transmission hydrostatique selon la revendication 1, caractérisée en ce que le dispositif à soupape de décharge (9) est une soupape de limitation de pression (64), montée dans la conduite de décharge (65), commandée avec la pression de commande, prélevée de la deuxième conduite de pression de réglage (45, 51, 43), par l'intermédiaire d'une conduite de commande (66), à l'encontre de la contre-pression (66), en direction de la position d'écoulement.

3. Transmission hydrostatique selon la revendication 1, caractérisée en ce que le dispositif à soupape de décharge (10) comprend une soupape de limitation de pression (72) et une soupape de commutation (73), qui toutes deux sont montées dans la conduite de décharge (65), la première (72) en aval de la dernière (73) et sont commandées chacune par la pression de commande, prélevée de la deuxième conduite de pression de réglage (45, 51, 43), à l'encontre de la contre-pression (66, 76), en direction de la position d'écoulement, la contre-pression (66) étant supérieure, sur la soupape de limitation de pression (72), à la contre-pression (76) sur la soupape de commutation (73).

4. Transmission hydrostatique selon la revendication 3, caractérisée en ce que la soupape de commutation (73) est directement raccordée, par une conduite de commande (70) et la soupape de limitation de pression (72) est indirectement raccordée, par une conduite de commande (77), via le tronçon (75) de la conduite de décharge (65), situé entre les deux soupapes (72, 73), à la deuxième conduite de pression de réglage (45, 51, 43).

5. Transmission hydrostatique selon l'une au moins des revendications précédentes, caractérisé en ce que la contre-pression (66, 76), agissant sur le dispositif à soupape de décharge (9, 10), en direction de la position de fermeture, est la pression d'un ressort réglable.

6. Transmission hydrostatique selon l'une au moins des revendications précédentes, caractérisée en ce que dans la première conduite de pression de réglage (44, 57, 43), il est monté un dispositif à clapet anti-retour (47), s'ouvrant en direction du dispositif de réglage (4) et, dans la deuxième conduite de pression de réglage (45, 51, 43), il est également monté, en amont, par rapport au fonctionnement en poussée, des raccords de la conduite de commande (70) et de la conduite de décharge (65), un dispositif à clapet anti-retour (55, 56), s'ouvrant en direction du dispositif de réglage (4).

7. Transmission hydrostatique selon la revendication 6, dans une réalisation réversible, la soupape de freinage (6) étant montée dans les deux conduites de travail (13, 14), la première conduite de pression de réglage (44, 57, 42) étant raccordée, entre la pompe hydraulique (1) et la soupape de freinage (6), ainsi que la deuxiéme conduite de pression de réglage (45, 51, 43) étant raccordée entre le moteur hydraulique (2) et la soupape de freinage (6), aux deux conduites de travail (13, 14), caractérisée en ce que le dispositif à soupape de décharge (9, 10) est commandé par une pression de commande, prélevée de la première conduite de pression de réglage (44, 57, 43), par l'intermédiaire d'une conduite de commande (69), en amont du dispositif à clapet anti-retour (47), à l'encontre de la pression de commande prélevée de la deuxième conduite de pression de réglage (45, 51, 43), en direction de la position de fermeture.

8. Transmission hydrostatique selon l'une au moins des revendications précédentes, caractérisée en ce que le dispositif à soupape de décharge (9, 10) peut être commandé volontairement ou en fonction d'une grandeur à choisir librement, par l'intermédiaire d'une autre conduite de commande (71), avec une autre pression de commande, à l'encontre de la contre-pression (66, 76), en direction de la position d'écoulement.

9. Transmission hydrostatique selon l'une au moins des revendications 3 à 8, caractérisée en ce que la soupape de commutation (73) est commandée avec la pression de commande, prélevée, par l'intermédiaire de la conduite de commande (69), de la première conduite de pression de réglage (44, 57, 43), ou par l'intermédiaire de l'autre conduite de commande (71) avec l'autre pression de commande.

10. Transmission hydrostatique selon l'une au moins des revendications précédentes, caractérisée en ce que le dispositif de réglage (4) est sollicité par un ressort (63) en direction du volume de déplacement minimal du moteur hydraulique (2).

11. Transmission hydrostatique selon la revendication 10, caractérisée par une soupape de régulation (5), qui est commandée en fonctionnement sous charge et en fonctionnement en poussée de la transmission hydrostatique, avec une pression de commande, prélevée de la première conduite de pression de réglage (44, 57, 53) ou de la deuxième conduite de pression de réglage (45, 51, 43), à l'encontre d'une contre-pression, en direction de la position de régulation et qui, dans cette position de régulation, règle l'action de la pression de réglage sur le dispositif de réglage (4), en direction du volume de déplacement maximal du moteur hydraulique (2), la contre-pression comprenant la pression du ressort (63), agissant sur le dispositif de réglage (4), dont la sollicitation croît lorsqu'augmente le déplacement du dispositif de réglage (4) en direction du volume de déplacement maximal du moteur hydraulique (2).

12. Transmission hydrostatique selon l'une au moins des revendications précédentes, caractérisée en ce que la première et la deuxième conduites de pression de réglage (44, 57, 43; 45, 51, 43) comprennent une conduite de pression de réglage (43) commune, menant au dispositif de réglage (4) ainsi qu'une première et une deuxième conduites de dérivation de pression de réglage (44, 45), qui partent de la conduite de pression de réglage (43) commune, à une bifurcation (A) et dans lesquelles sont montés les dispositifs à clapet anti-retour (47 ; 55, 56).

13. Transmission hydrostatique selon les revendications 11 et 12, caractérisée en ce que la soupape de régulation (5) est montée dans la conduite de pression de réglage (43) commune.

14. Transmission hydrostatique selon l'une au moins des revendications 11 à 13, caractérisée en ce que la pression de commande, pour la commande de la soupape de régulation (5), est prélevée, par l'intermédiaire d'une conduite de commande (62), de la première conduite de dérivation de pression de réglage (44), dans la zone comprise entre le dispositif à clapet anti-retour (47) et un organe d'étranglement (46).

15. Transmission hydrostatique selon la revendication 14, caractérisée en ce que la conduite de décharge (65) est raccordée à la première conduite de dérivation de pression de réglage (44), dans la zone comprise entre le dispositif à clapet anti-retour (47) et l'organe d'étranglement (46).
